# EUROPÄISCHE PATENTANMELDUNG

(11) **EP 2 053 023 A1**
(43) Veröffentlichungstag der Anmeldung: **29.04.2009**
(21) Anmeldenummer: 07119044.1
(22) Anmeldetag: 23.10.2007
(51) Int. Cl.: C01G 25/02, C09C 1/00

(54) **Zirkondioxid-Pulver und Zirkondioxid-Dispersion**

(71) Anmelder: Evonik Degussa GmbH, 45128 Essen (DE)
(72) Erfinder: Katusic, Stipan, 65812 Bad Soden (DE); Tontrup, Christoph, 63755 Alzenau (DE); Mörters, Martin, 79618 Rheinfelden (DE); Katerinak, Witold, 79664 Wehr (DE)

(57) **Zusammenfassung**

Zirkondioxidpulver in Form aggregierter Primärpartikel, mit einer BET-Oberfläche von 30 bis 150 m²/g und einem Weißgrad nach Berger von mindestens 88%.

Es wird hergestellt indem man eine Lösung, welche eine organische Zirkonverbindung enthält, zerstäubt, mit einem Brenngas und Luft vermischt und das Gemisch in einer Flamme in einen von einem Gehäuse umschlossenen Reaktionsraum hinein verbrennen lässt, wobei die Temperatur im Reaktionsraum und entlang der dem Rektionsraum zugewandten Seite der Wandung des Gehäuses wenigstens 500°C beträgt.

Dispersion enthaltend das Zirkondioxidpulver.

Verwendung des Zirkondioxidpulvers und der Dispersion zur Herstellung von Keramiken.

## Beschreibung

Die Erfindung betrifft ein Zirkondioxidpulver, ein Verfahren zu dessen Herstellung und seine Verwendung. Die Erfindung betrifft weiterhin eine dieses Zirkondioxidpulver enthaltende Dispersion und ihre Verwendung.

In EP-A-717008 wird ein pyrogen hergestelltes Zirkondioxidpulver mit einer spezifischen Oberfläche zwischen 20 und 200 m²/g aus gegebenenfalls miteinander verwachsenen Primärpartikeln von 7 bis 100 nm Größe offenbart. Das Pulver weist eine Stampfdichte zwischen 40 und 150 g/l auf, die Searszahl liegt zwischen 1 und 20 ml/2g und der Chlorgehalt ist kleiner als 0,6 Gew.-%. Nachteilig bei diesem Pulver ist, dass Chloridgehalte von weniger als 0,3 Gew.-% nur durch energische Reaktionsbedingungen erzielt werden können, die wiederum das Aussehen und die physikalischen Eigenschaften des Pulvers beeinträchtigen.

EP-A-1142830 offenbart ein nanoskaliges, pyrogen hergestelltes Zirkondioxidpulver mit einer BET-Oberfläche zwischen 1 und 600 m²/g und einem Gesamtchloridgehalt von weniger als 0,05 Gew.-%. Es wird hergestellt, indem man beispielsweise Zirkon-n-propanolat in n-Propanol zerstäubt und in einer Knallgasflamme verbrennt. Nachteilig an diesem Pulver ist, dass es graustichig ist.

In DE-A-102004061698 wird ein Zirkondioxidpulver in Form von Aggregaten von Primärpartikeln offenbart, das eine BET-Oberfläche von 60 ± 15 m²/g, einen mittleren Primärpartikeldurchmesser von weniger als 20 nm, eine mittlere Aggregatfläche von weniger als 10000 nm², einen mittleren, äquivalenten Kreisdurchmesser von weniger als 100 nm, einen mittleren Aggregatumfang von weniger als 700 nm aufweist. Weiterhin beträgt der Gehalt an Zirkondioxid 95 bis 99,9 Gew.-%, an Hafniumdioxid 0,1 bis 5 Gew.-%, an Kohlenstoff 0 bis 0,15 Gew.-% und an Chlorid 0 bis 0,05 Gew.-%. Nachteilig an diesem Pulver ist, dass es graustichig ist.

In DE-A-102004039139 wird ein nanoskaliges Yttrium-Zirkon-Mischoxidpulver in Form von aggregierten Primärpartikeln offenbart, das eine BET-Oberfläche von 40 bis 100 m²/g und einen mittleren, anzahlbezogenen Primärpartikel-Durchmesser von 3 bis 30 nm aufweist. Der Gehalt an Yttrium beträgt 5 bis 15 Gew.-%, an monoklinem Zirkondioxid <1 bis 10 Gew.-% und an tetragonalem Zirkondioxid 10 bis 95 Gew.-%, wobei der Gehalt an monoklinem Zirkonoxid nach zweistündigem Erhitzen auf 1300°C kleiner 1 Gew.-% ist.

US6030914 offenbart ein Zirkondioxidpulver, bestehend aus Primärpartikeln, welches eine BET-Oberfläche von 40 bis 200 m²/g und eine mittlere Partikelgröße von höchstens 0,1 µm aufweist, wobei das Verhältnis von mittlerer, mittels Elektronenmikroskop bestimmter Partikelgröße zur mittleren, aus der BET-Oberfläche berechneten Partikelgröße wenigstens 0,9 ist. Dabei soll der Zahlenwert von wenigstens 0,9 ausdrücken, dass die Primärpartikel nicht miteinander versintert sind. Das Verfahren zur Herstellung dieses Pulvers ist sehr zeitaufwändig und empfindlich gegenüber Verunreinigungen.

Die zahlreichen Verfahren, die zur Herstellung hochoberflächiger Zirkondioxidpulver bekannt sind, lösen nicht das Problem, Produkte mit hoher Reinheit und geringem Graustich bereitzustellen. Zwar liefert eine Bulk-Analyse dieser Produkte in der Regel akzeptable Werte, die Aussagekraft dieser Werte ist jedoch beschränkt, da bereits wenige dunkel gefärbte Partikel ausreichen, um das Pulver insgesamt als nicht weiß erscheinen zu lassen. Gerade der optische Eindruck ist jedoch bei vielen Anwendungen entscheidend.

Aufgabe der vorliegenden Erfindung war es daher ein Pulver bereitzustellen, das diese Nachteile nicht aufweist. Aufgabe war es weiterhin, ein Verfahren zur Herstellung dieses Pulvers bereitzustellen.

Gegenstand der Erfindung ist ein fein dispergierbares Zirkondioxidpulver, welches
· in Form aggregierter Primärpartikel vorliegt,
· eine BET-Oberfläche von 30 bis 150 m²/g,
· und einen Weißgrad nach Berger von 88% oder mehr, vorzugsweise 90% oder mehr aufweist.

Das erfindungsgemäße Zirkondioxidpulver ist fein dispergierbar. Darunter ist zu verstehen, dass das Zirkondioxidpulver so dispergierbar ist, dass der mittlere Aggregatdurchmesser in einer Dispersion weniger als 200 nm beträgt.

Der Weißgrad nach Berger wird mit Hilfe des Micro Color, Dr. Lange bestimmt. Der Weißgrad nach Berger ist als WB = RY + 3( RZ - RX) definiert, wobei RX, RY, RZ entsprechende Reflexionsfaktoren bei Einsatz eines X-, Y-, Z-Farbmessfilters sind. Eine ausführliche Beschreibung ist beispielsweise der Broschüre "Grundlagen der Farbmessung" (Lange, Anwendungsbericht Nr.10d DOC042.00.00017 07/2004) zu entnehmen.

Das erfindungsgemäße Zirkondioxidpulver ist vorzugsweise pyrogener Natur ist. Unter "pyrogen" ist die Hydrolyse beziehungsweise die Oxidation von Zirkonverbindungen in der Gasphase in einer Flamme, erzeugt durch die Reaktion eines wasserstoffhaltigen Brenngases und Sauerstoff zu verstehen. Dabei werden zunächst hochdisperse, nicht poröse Primärpartikel gebildet, die im weiteren Reaktionsverlauf zu Aggregaten zusammenwachsen und diese weiter zu Agglomeraten zusammenlagern können. Die Oberflächen dieser Partikel können saure oder basische Zentren aufweisen.

Die Primärpartikel des erfindungsgemäßen Pulvers können wenigstens eine, die tetragonale Phase oder die kubische Phase von Zirkondioxid, stabilisierende Komponente in Form eines Oxides von Yttrium, Calcium, Magnesium oder Aluminium enthalten, wobei insbesondere ein mit 3 mol% Yttrium teilstabilisiertes Zirkondioxid oder ein mit 8 mol% Yttrium vollstabilisiertes Zirkondioxid besonders bevorzugt sein können.

Das erfindungsgemäße Zirkondioxidpulver kann bevorzugt eine BET-Oberfläche von 35 bis 65 m²/g, besonders bevorzugt eine von >35 bis <50 m²/g und ganz besonders bevorzugt eine von 37 bis 43 m²/g aufweisen. Insbesondere das erfindungsgemäße Zirkondioxidpulver mit einer BET-Oberfläche von 37 bis 43 m²/g weist in Dispersionen eine hohe Sedimentationsstabilität bei gleichzeitig guter Verarbeitbarkeit auf. Unter Verarbeitbarkeit ist zu verstehen, dass bei Einsatz des erfindungsgemäßen Zirkondioxidpulvers die Viskosität von Dispersionen auch bei hohen Füllgraden im Vergleich zum Stand der Technik niedrig ist. Die BET-Oberfläche wird bestimmt nach DIN 66131.

Das erfindungsgemäße Zirkondioxidpulver zeichnet sich weiterhin durch seine hohe Reinheit aus. Die Summe der Anteile von Zirkondioxid beziehungsweise Zirkondioxid und stabilisierender Komponente beträgt bevorzugt mindestens 98 Gew.-%, besonders bevorzugt mindestens 99 Gew.-%. Der Anteil Zirkondioxid soll dabei auch die Anteile des stets mit Zirkonverbindungen auftretenden Anteiles an Hafniumverbindungen in Form von Hafniumdioxid mit umfassen. Der Anteil an Hafniumdioxid liegt in der Regel bei 1 bis 4 Gew.-%, bezogen auf ZrO₂.

Weiterhin ist ein erfindungsgemäßes Zirkondioxid bevorzugt, welches die Elemente Cd, Ce, Fe, Na, Nb, P, Ti, Zn in Anteilen von < 10 ppm und die Elemente Ba, Bi, Cr, K, Mn, Sb in Anteilen von < 5 ppm enthält, wobei die Summe der Anteile aller dieser Elemente < 100 ppm ist.

Das erfindungsgemäße Zirkondioxidpulver kann weiterhin einen Anteil an Chlorid von weniger als 0,05 Gew.-%, in der Regel 0 bis < 0,5 Gew.-%, bevorzugt 0,01 bis 0,3 Gew.-%, bezogen auf das Pulver aufweisen.

Der Anteil an Kohlenstoff im erfindungsgemäßen Zirkondioxidpulver kann weniger als 0,2 Gew.-%, in der Regel 0,005 bis < 0,2 Gew.-%, bevorzugt 0,01 bis 0,1 Gew.-%, bezogen auf das Pulver betragen. Die hohe Reinheit kann beispielweise bei der Herstellung von Keramiken wichtig sein, wenn es darum geht niedrigschmelzende Phasen zu vermeiden.

Das erfindungsgemäße Zirkondioxidpulver kann auch ein oberflächenmodifiziertes Zirkondioxidpulver sein. Dieses kann durch Reaktion von Oberflächenmodifizierungsreagentien mit aktiven Gruppen an der Oberfläche des Zirkondioxides erhalten werden. Bevorzugt können hierzu die folgenden Silane, einzeln oder als Mischung, eingesetzt werden:

Organosilane (RO)₃Si(CₙH₂ₙ₊₁) und (RO)₃Si(CₙH₂ₙ₋₁)
mit R = Alkyl, wie Methyl, Ethyl, n-Propyl, i-Propyl, Butyl und n=1-20.

Organosilane R' ₓ(RO)_{y}Si(CₙH₂ₙ₊₁) und R' ₓ(RO)_{y}Si(CₙH₂ₙ₋₁)
mit R=Alkyl, wie Methyl, Ethyl, n-Propyl, i-Propyl, Butyl; R'=Alkyl, wie Methyl, Ethyl, n-Propyl, i-Propyl, Butyl; R'=Cycloalkyl; n=1-20; x+y=3, x=1, 2; y=1, 2.

Halogenorganosilane X₃Si(CₙH₂ₙ₊₁) und X₃Si(CₙH₂ₙ₋₁)
mit X=Cl, Br; n=1-20.

Halogenorganosilane X₂(R')Si (CₙH₂ₙ₊₁) und X₂(R')Si(CₙH₂ₙ₋₁) mit X=Cl, Br, R' = Alkyl, wie Methyl, Ethyl, n-Propyl, i-Propyl, Butyl-; R'=Cycloalkyl; n=1-20

Halogenorganosilane X (R')₂Si(CₙH₂ₙ₊₁) und X (R')₂Si(CₙH₂ₙ₋₁) mit X=Cl, Br; R' = Alkyl, wie Methyl-, Ethyl-, n-Propyl-, i-Propyl-, Butyl-; R'=Cycloalkyl; n=1-20

Organosilane (RO)₃Si(CH₂)ₘ-R'
mit R=Alkyl, wie Methyl-, Ethyl-, Propyl-; m=0,1-20; R'= Methyl, Aryl wie -C₆H₅, substituierte Phenylreste, C₄F₉, OCF₂-CHF-CF₃, C₆F₁₃, OCF₂CHF₂, NH₂, N₃, SCN, CH=CH₂, NH-CH₂-CH₂-NH₂, N-(CH₂-CH₂-NH₂)₂, OOC(CH₃)C=CH₂, OCH₂-CH(O)CH₂, NH-CO-N-CO-(CH₂)₅, NH-COO-CH₃, NH-COO-CH₂-CH₃, NH-(CH₂)₃Si(OR)₃, Sₓ-(CH₂)₃Si(OR)₃, SH, NR'R''R''' mit R'=Alkyl, Aryl; R''=H, Alkyl, Aryl; R'''=H, Alkyl, Aryl, Benzyl, C₂H₄NR'''' R''''' mit R'''' = H, Alkyl und R''''' = H, Alkyl.

Organosilane (R")ₓ(RO)_{y}Si(CH₂)ₘ-R'
mit R"=Alkyl, x+y=3; Cycloalkyl, x=1,2, y=1,2; m=0,1 bis 20; R'=Methyl, Aryl, wie C₆H₅, substituierte Phenylreste, C₄F₉, OCF₂-CHF-CF₃, C₆F₁₃, OCF₂CHF₂, NH₂, N₃, SCN, CH=CH₂, NH-CH₂-CH₂-NH₂, N-(CH₂-CH₂-NH₂)₂, OOC(CH₃)C=CH₂, OCH₂-CH(O)CH₂, NH-CO-N-CO-(CH₂)₅, NH-COO-CH₃, NH-COO-CH₂-CH₃, NH-(CH₂)₃Si(OR)₃, Sₓ-(CH₂)₃Si(OR)₃, SH, NR'R''R''' mit R'=Alkyl, Aryl; R''=H, Alkyl, Aryl; R'''=H, Alkyl, Aryl, Benzyl, C₂H₄NR'''' R''''' mit R''''=H, Alkyl und R'''''= H, Alkyl.

Halogenorganosilane X₃Si(CH₂)ₘ-R'
X=Cl, Br; m=0,1-20; R' = Methyl, Aryl wie C₆H₅, substituierte Phenylreste, C₄F₉, OCF₂-CHF-CF₃, C₆F₁₃, O-CF₂-CHF₂, NH₂, N₃, SCN, CH=CH₂, NH-CH₂-CH₂-NH₂, N-(CH₂-CH₂-NH₂)₂, -OOC(CH₃)C=CH₂, OCH₂-CH(O)CH₂, NH-CO-N-CO-(CH₂)₅, NH-COO-CH₃, -NH-COO-CH₂-CH₃, -NH-(CH₂)₃Si(OR)₃, -Sₓ-(CH₂)₃Si(OR)₃, wobei R = Methyl, Ethyl, Propyl, Butyl und x=1 oder 2, SH.

Halogenorganosilane RX₂Si(CH₂)ₘR'
X=Cl, Br; m=0,1-20; R' = Methyl, Aryl wie C₆H₅, substituierte Phenylreste, C₄F₉, OCF₂-CHF-CF₃, C₆F₁₃, O-CF₂-CHF₂, NH₂, N₃, SCN, CH=CH₂, NH-CH₂-CH₂-NH₂, N-(CH₂-CH₂-NH₂)₂, -OOC(CH₃)C=CH₂, OCH₂-CH(O)CH₂, NH-CO-N-CO-(CH₂)₅, NH-COO-CH₃, -NH-COO-CH₂-CH₃, -NH-(CH₂)₃Si(OR)₃, -Sₓ-(CH₂)₃Si(OR)₃, wobei R = Methyl, Ethyl, Propyl, Butyl und x=1 oder 2, SH.

Halogenorganosilane R₂XSiCH₂)ₘR'
X=Cl, Br; m=0,1-20; R' = Methyl, Aryl wie C₆H₅, substituierte Phenylreste, C₄F₉, OCF₂-CHF-CF₃, C₆F₁₃, O-CF₂-CHF₂, NH₂, N₃, SCN, CH=CH₂, NH-CH₂-CH₂-NH₂, N-(CH₂-CH₂-NH₂)₂, -OOC(CH₃)C=CH₂, OCH₂-CH(O)CH₂, NH-CO-N-CO-(CH₂)₅, NH-COO-CH₃, -NH-COO-CH₂-CH₃, -NH-(CH₂)₃Si(OR)₃, -Sₓ-(CH₂)₃Si(OR)₃, wobei R = Methyl, Ethyl, Propyl, Butyl und x=1 oder 2, SH.

Silazane R'R₂SiNHSiR₂R' mit R,R'= Alkyl, Vinyl, Aryl.

Cyclische Polysiloxane D3, D4, D5
wobei unter D3, D4 und D5 cyclische Polysiloxane mit 3, 4 oder 5 Einheiten des Typs -O-Si(CH₃)₂ verstanden wird, z.B. Octamethylcyclotetrasiloxan = D4

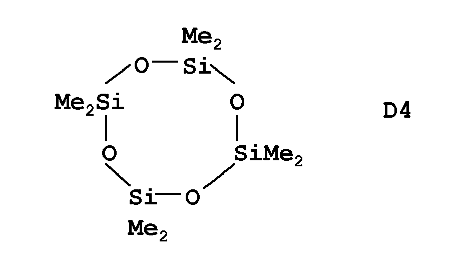

Polysiloxane bzw. Silikonöle des Typs 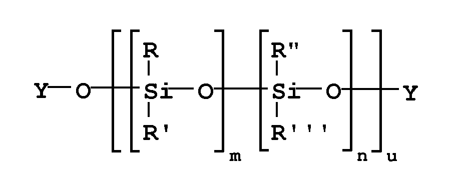 mit
R = Alkyl, Aryl, (CH₂)ₙ-NH₂, H
R' = Alkyl, Aryl, (CH₂)ₙ-NH₂, H
R" = Alkyl, Aryl, (CH₂)ₙ-NH₂, H
R''' = Alkyl, Aryl, (CH₂)ₙ-NH₂, H
Y = CH₃, H, C_{z}H_{2z+1} mit z=1-20,
Si(CH₃)₃, Si(CH₃)₂H, Si(CH₃)₂OH, Si (CH₃)₂(OCH₃),
Si(CH₃)₂(C_{z}H_{2z+1})
wobei
R' oder R" oder R''' (CH₂)_{z}-NH₂ und
z = 1 - 20,
m = 0, 1, 2, 3, ...∞,
n = 0, 1, 2, 3, ...∞,
u = 0, 1, 2, 3, ...∞ ist.

Bevorzugt können als Oberflächenmodifizierungsmittel folgende Stoffe eingesetzt werden: Octyltrimethoxysilan, Octyltriethoxysilan, Hexamethyldisilazan, 3-Methacryloxypropyltrimethoxysilan, 3-Methacryloxypropyltriethoxysilan, Hexadecyltrimethoxysilan, Hexadecyltriethoxysilan, Dimethylpolysiloxan, Glycidyloxypropyltrimethoxysilan, Glycidyloxypropyltriethoxysilan, Nonafluorohexyltrimethoxysilan, Tridecaflourooctyltrimethoxysilan, Tridecaflourooctyltriethoxysilan, Aminopropyltriethoxysilan.

Besonders bevorzugt können Octyltrimethoxysilan, Octyltriethoxysilan und Dimethylpolysiloxane eingesetzt werden.

Ein weiterer Gegenstand der Erfindung ist ein Verfahren zur Herstellung des erfindungsgemäßen Zirkondioxidpulvers, bei dem
· man eine Lösung, welche als Ausgangsstoff für das Zirkondioxid wenigstens eine organische Zirkonverbindung und gegebenenfalls wenigstens eine, die stabilisierende Komponente tragende Verbindung enthält, vorzugsweise mittels Luft oder einem inerten Gas, vorzugsweise unter Verwendung einer Mehrstoffdüse zerstäubt,
· mit einem Brenngas, vorzugsweise Wasserstoff und/oder Methan, und Luft vermischt und
· das Gemisch in einer Flamme in einen von einem Gehäuse umschlossenen Reaktionsraum hinein verbrennen lässt,
· die heißen Gase und das feste Produkte kühlt und anschliessend das feste Produkt von den Gasen abtrennt, wobei
· die Temperatur im Reaktionsraum und entlang der dem Rektionsraum zugewandten Seite der Wandung des Gehäuses wenigstens 500°C beträgt.

Bei dem erfindungsgemäßen Verfahren kann die Temperatur im Reaktionsraum und an Wandung des Gehäuses gleich sein. Das Gehäuse kann vorzugsweise ein hochtemperaturbeständiger Hochleistungswerkstoff, bevorzugt auf Basis einer NickelLegierung sein. In der Regel werden die Temperaturen jedoch unterschiedlich sein. Die Temperatur an der Wandung des Gehäuses kann bevorzugt 700 bis 1100°C sein. Falls notwendig kann die Wandung des Gehäuses beheizt werden.

Als alternative Maßnahme zum Beheizen der Wandung oder als zusätzliche Maßnahme hat sich bewährt, das Verfahren so auszuführen, dass zunächst die Temperatur der Wandung bei Temperaturen von weniger als 500°C gehalten wird. Dies führt dazu, dass die dem Rektionsraum zugewandte Seite der Wandung teilweise oder vollständig mit einer festhaftenden Schicht der während der Reaktion gebildeten, festen Produkte bedeckt wird. Nachfolgend wird dann die Temperatur wieder auf Werte von mehr als 500°C angehoben.

Der Ausgangsstoff für das Zirkondioxid ist nach dem erfindungsgemäßen Verfahren organischer Natur. Es hat sich als vorteilhaft erwiesen, wenn man als Ausgangsstoff wenigstens ein Zirkoncarboxylat oder ausschließlich Zirkoncarboxylate einsetzt. Besonders bevorzugt können Zirkoncarboxylate von aliphatischen Carbonsäuren mit 6 bis 9 Kohlenstoffatomen eingesetzt werden, wie zum Beispiel das vergleichsweise gut verfügbare Zirkon-2-ethylhexanoat.

Falls ein Zirkondioxipulver in stabilisierter Form hergestellt werden soll, können sowohl anorganische wie auch organische Verbindungen eingesetzt werden. Beispielhaft seien Yttriumnitrat und Yttrium-2-Ethlyhexanoat genannt.

Bevorzugt ist eine Ausführungsform des, bei dem man die Ausgangsstoffe, in einem organischen Lösungsmittel gelöst, verdüst. Als geeignete Lösungsmittel kommen Methanol, Ethanol, n-Propanol, iso-Propanol, n-Butanol, tert.-Butanol, 2-Propanon, 2-Butanon, Diethylether, tert.-Butylmethylether, Tetrahydrofuran, C₁-C₈-Carbonsäuren, Essigsäureethylester, Toluol, Benzin und deren Gemische in Frage.

Es hat sich als besonders vorteilhaft erwiesen, wenn das Lösungsmittel eine oder mehrere aliphatische Carbonsäuren mit 6 bis 9 Kohlenstoffatomen, insbesondere 2-Ethylhexansäure, umfasst.

Die Zirkonkonzentration, gerechnet als ZrO₂, in der Lösung beträgt vorzugsweise wenigstens 15 Gew.-% und nicht mehr als 35 Gew.-%, bezogen auf die Lösung.

Ein weiterer Gegenstand der Erfindung ist eine das erfindungsgemäße Zirkondioxidpulver enthaltende Dispersion mit einem Gehalt an Zirkondioxid von 20 bis 70 Gew.-%, bevorzugt 30 bis 60 Gew.-%, und einem mittleren, mittels Laserbeugung bestimmtem Aggregatdurchmesser von weniger als 200 nm, bevorzugt weniger als 100 nm.

Die flüssige Phase der Dispersion kann organisch oder wässerig sein. Unter wässerig ist zu verstehen, das wenigstens 80 Gew.-%, bevorzugt wenigstens 90 Gew.-%, besonders bevorzugt wenigstens 95 Gew.-% der flüssigen Phase aus Wasser besteht.

Die Dispersion kann weiterhin ein oberflächenmodifiziertes Zirkondioxidpulver enthalten, welches erhältlich ist indem ein Oberflächen-Modifizierungsmittel zu einer das erfindungsgemäße Zirkondioxidpulver enthaltenden flüssigen Phase gibt.

Unter oberflächenmodifiziert im Sinne der Erfindung ist zu verstehen, dass wenigstens ein Teil der an der Oberfläche des Pulvers sich befindlichen Hydroxygruppen mit einem Oberflächenmodifizierungsmittel unter Bildung einer chemischen Bindung reagiert haben. Bei der chemischen Bindung handelt es sich bevorzugt um eine kovalente, ionische oder eine koordinative Bindung zwischen dem Oberflächenmodifizierungsmittel und dem Partikel, aber auch um Wasserstoffbrückenbindungen. Unter einer koordinativen Bindung wird eine Komplexbildung verstanden. So kann zwischen den funktionellen Gruppen des Modifizierungsmittels und dem Partikel zum Beispiel eine Säure/Base-Reaktion nach Brönsted oder Lewis, eine Komplexbildung oder eine Veresterung stattfinden.

Bei der funktionellen Gruppe, die das Modifizierungsmittel umfasst, handelt es sich vorzugsweise um Carbonsäuregruppen, Säurechloridgruppen, Estergruppen, Nitril- und Isonitrilgruppen, OH-Gruppen, SH-Gruppen, Epoxidgruppen, Anhydridgruppen, Säureamidgruppen, primäre, sekundäre und tertiäre Aminogruppen, Si-OH-Gruppen, hydrolysierbare Reste von Silanen oder C-H-acide Gruppierungen, wie in beta-Dicarbonylverbindungen. Das Oberflächenmodifizierungsmittel kann auch mehr als eine derartige funktionelle Gruppe umfassen, wie zum Beispiel in Betainen, Aminosäuren, EDTA.

Geeignete Oberflächenmodifizierungsmittel können sein: Gesättigte oder ungesättigte Mono- und Polycarbonsäuren mit 1 bis 24 Kohlenstoffatomen, wie zum Beispiel Ameisensäure, Essigsäure, Propionsäure, Buttersäure, Pentansäure, Hexansäure, Acrylsäure, Methacrylsäure, Crotonsäure, Zitronensäure, Adipinsäure, Bernsteinsäure, Glutarsäure, Oxalsäure, Maleinsäure, Fumarsäure, Itaconsäure und Stearinsäure sowie die entsprechenden Säureanhydride, -chloride, -ester und -amide sowie deren Salze, insbesondere deren Ammoniumsalze. Geeignet sind auch solche Carbonsäuren, deren Kohlenstoffkette durch O-, S- oder NH-Gruppen unterbrochen ist, wie Ethercarbonsäuren (Mono- und Polyethercarbonsäuren sowie die entsprechenden Säurenhydride, -chloride, -ester und -amide), Oxacarbonsäuren, wie 3,6-Dioxaheptansäure und 2-[2-[2-Methoxy]ethoxy]essigsäure.

Mono- und Polyamine der allgemeinen Formel Q₃₋ₙNHₙ, mit n = 0, 1 oder 2 deren Reste Q unabhängig voneinander sind, mit C₁-C₁₂-Alkyl, insbesondere C₁-C₆-Alkyl und besonders bevorzugt C₁-C₄-Alkyl, zum Beispiel Methyl, Ethyl, n-Propyl und i-Propyl und Butyl. Weiterhin Aryl, Alkaryl oder Aralkyl mit 6 bis 24 Kohlenstoffatomen, wie zum Beispiel Phenyl, Naphthyl, Tolyl und Benzyl.

Weiterhin Polyalkylenamine der allgemeinen Formel Y₂N(-Z-NY)y-Y, worin Y unabhängig von Q oder N ist, wobei Q wie vorstehend definiert ist, y eine ganze Zahl von 1 bis 6, vorzugsweise 1 bis 3, ist, und Z eine Alkylengruppe mit 1 bis 4, vorzugsweise 2 oder 3 Kohlenstoffatomen ist. Beispiele sind Methylamin, Dimethylamin, Trimethylamin, Ethylamin, Anilin, N-Methylanilin, Diphenylamin, Triphenylamin, Toluidin, Ethylendiamin, Diethylentriamin.

Bevorzugte beta-Dicarbonylverbindungen mit 4 bis 12, insbesondere 5 bis 8 Kohlenstoffatomen, wie zum Beispiel Acetylaceton, 2,4-Hexandion, 3,5-Heptandion, Acetessigsäure, Acetessigsäure-C₁-C₄-alkylester, wie Acetessigsäureethylester, Diacetyl und Acetonylaceton.

Aminosäuren, wie beta-Alanin, Glycin, Valin, Aminocapronsäure, Leucin und Isoleucin.

Silane, die mindestens eine nicht hydrolysierbare Gruppe oder eine Hydroxygruppe aufweisen, insbesondere hydrolysierbare Organosilane, die zusätzlich mindestens einen nicht hydrolysierbaren Rest aufweisen. Bevorzugt können Silane der allgemeinen Formel RₐSiX₄₋ₐ als Oberflächenmodifizierungsreagenz dienen, worin die Reste R gleich oder verschieden sind und nicht hydrolysierbare Gruppen darstellen, die Reste X gleich oder verschieden sind und hydrolysierbare Gruppen oder Hydroxygruppen bedeuten und a den Wert 1, 2 oder 3 hat. Der Wert a ist bevorzugt 1.

In der allgemeinen Formel sind die hydrolysierbaren Gruppen X, die gleich oder voneinander verschieden sein können, beispielsweise Wasserstoff oder Halogen (F, Cl, Br oder I), Alkoxy (vorzugsweise C₁-C₆-Alkoxy, wie zum Beispiel Methoxy, Ethoxy, n-Propoxy, i-Propoxy und Butoxy), Aryloxy (vorzugsweise C₆-C₁₀-Aryloxy, wie zum Beispiel Phenoxy), Acyloxy (vorzugsweise C₁-C₆-Acyloxy, wie zum Beispiel Acetoxy oder Propionyloxy), Alkylcarbonyl (vorzugsweise C₂-C₇-Alkylcarbonyl, wie zum Beispiel Acetyl), Amino, Monoalkylamino oder Dialkylamino mit vorzugsweise 1 bis 12, insbesondere 1 bis 6 Kohlenstoffatomen. Bevorzugte hydrolysierbare Reste sind Halogen, Alkoxygruppen und Acyloxygruppen. Besonders bevorzugte hydrolysierbare Reste sind C₁-C₄-Alkoxygruppen, insbesondere Methoxy und Ethoxy.

Bei den nicht hydrolysierbaren Resten R, die gleich oder voneinander verschieden sein können, kann es sich um nicht hydrolysierbare Reste R mit oder ohne eine funktionelle Gruppe handeln.

Der nicht hydrolysierbare Rest R ohne funktionelle Gruppe kann beispielsweise Alkyl (vorzugsweise C₁-C₈-Alkyl, wie Methyl, Ethyl, n-Propyl, Isopropyl, n-Butyl, sek.-Butyl und tert.-Butyl, Pentyl, Hexyl, Octyl oder Cyclohexyl), Alkenyl (vorzugsweise C₂-C₆-Alkenyl, wie zum Beispiel Vinyl, 1-Propenyl, 2-Propenyl und Butenyl), Alkinyl (vorzugsweise C₂-C₆-Alkinyl, wie zum Beispiel Acetylenyl und Propargyl), Aryl (vorzugsweise C₆-C₁₀-Aryl, wie zum Beispiel Phenyl und Naphthyl) sowie entsprechende Alkaryle und Aralkyle (zum Beispiel Tolyl, Benzyl und Phenethyl) sein. Die Reste R und X können gegebenenfalls einen oder mehrere übliche Substituenten, wie zum Beispiel Halogen oder Alkoxy, aufweisen. Bevorzugt sind Alkyltrialkoxysilane.

Beispiele hierfür sind CH₃SiCl₃, CH₃Si(OC₂H₅)₃, CH₃Si(OCH₃)₃, C₂H₅SiCl₃, C₂H₅Si(OC₂H₅)₃, C₂H₅Si(OCH₃)₃, C₃H₇Si(OC₂H₅)₃, (C₂H₅O)₃SiC₃H₆Cl, (CH₃)₂SiCl₂, (CH₃)₂Si(OC₂H₅)₂, (CH₃)₂Si(OH)₂, C₆H₅Si(OCH₃)₃, C₆H₅Si(OC₂H₅)₃, C₆H₅CH₂CH₂Si(OCH₃)₃, (C₆H₅)₂SiCl₂, (C₆H₅)₂Si(OC₂H₅)₂, (i-C₃H₇)₃SiOH, CH₂=CHSi(OOCCH₃)₃, CH₂=CHSiCl₃, CH₂=CH-Si (OC₂H₅)₃, CH₂=CHSi(OC₂H₅)₃, CH₂=CH-Si(OC₂H₄OCH₃)₃, CH₂=CH-CH₂-Si(OC₂H₅)₃, CH₂=CH-CH₂-Si (OC₂H₅)₃, CH₂=CH-CH₂Si(OOOCH₃)₃, n-C₆H₁₃-CH₂-CH₂-Si(OC₂H₅)₃ und n-C₈H₁₇-CH₂CH₂-Si (OC₂H₅)₃.

Der nicht hydrolysierbare Rest R mit einer funktionellen Gruppe kann zum Beispiel als funktionelle Gruppe eine Epoxid- (zum Beispiel Glycidyl- oder Glycidyloxy-), Hydroxy-, Ether-, Amino-, Monoalkylamino-, Dialkylamino-, gegebenenfalls substituierte Anilino-, Amid-, Carboxy-, Acryl-, Acryloxy-, Methacryl-, Methacryloxy-, Mercapto-, Cyano-, Alkoxy-, Isocyanato-, Aldehyd-, Alkylcarbonyl-, Säureanhydrid- und Phosphorsäuregruppe umfassen. Diese funktionellen Gruppen sind über Alkylen-, Alkenylen- oder Arylen-Brückengruppen, die durch Sauerstoff- oder -NH-Gruppen unterbrochen sein können, an das Siliciumatom gebunden. Die Brückengruppen enthalten vorzugsweise 1 bis 18, vorzugsweise 1 bis 8 und insbesondere 1 bis 6 Kohlenstoffatome.

Die genannten zweiwertigen Brückengruppen und gegebenenfalls vorliegende Substituenten, wie bei den Alkylaminogruppen, leiten sich zum Beispiel von den oben genannten einwertigen Alkyl-, Alkenyl-, Aryl-, Alkaryl- oder Aralkylresten ab. Natürlich kann der Rest R auch mehr als eine funktionelle Gruppe aufweisen.

Bevorzugte Beispiele für nicht hydrolysierbare Reste R mit funktionellen Gruppen sind ein Glycidyl- oder ein Glycidyloxy-(C₁-C₂₀)-alkylen-Rest, wie beta-Glycidyloxyethyl, gamma-Glycidyloxypropyl, delta-Glycidyloxybutyl, epsilon-Glycidyloxypentyl, omega-Glycidyloxyhexyl und 2-(3,4-Epoxycyclohexyl)ethyl, ein (Meth)acryloxy-(C₁-C₆)-alkylen-Rest, zum Beispiel (Meth)acryloxymethyl, (Meth)acryloxyethyl, (Meth)acryloxypropyl oder (Meth)acryloxybutyl, und ein 3-Isocyanatopropylrest.

Beispiele für entsprechende Silane sind gamma-Glycidyloxypropyltrimethoxysilan (GPTS), gamma-Glycidyloxypropyltriethoxysilan (GPTES), 3-Isocyanatopropyltriethoxysilan, 3-Isocyanatopropyldimethylchlorsilan, 3-Aminopropyltrimethoxysilan (APTS), 3-Aminopropyltriethoxysilan (APTES), N-(2-Aminoethyl)-3-aminopropyltrimethoxysilan, N-[N'-(2'-Aminoethyl)-2-aminoethyl]-3-aminopropyltrimethoxysilan, Hydroxymethyltriethoxysilan, 2-[Methoxy(polyethylenoxy)propyl]trimethoxysilan, Bis-(hydroxyethyl)-3-aminopropyltriethoxysilan, N-Hydroxyethyl-N-methylaminopropyltriethoxysilan, 3-(Meth)acryloxypropyltriethoxysilan und 3-(Meth)acryloxypropyltrimethoxysilan.

Besonders vorteilhaft ist es, wenn die in der erfindungsgemäßen Dispersion vorliegenden Zirkondioxidpulver oder Zirkon-Mischoxidpulver mit 3-Aminopropyltriethoxysilan (AMEO), Ammoniumsalzen von Polycarbonsäuren, beispielsweise Dolapix CE64 (Fa. Zschimmer & Schwarz), Tetraalkylammoniumhydroxiden, wie Tetramethylammoniumhydroxid oder Tetraethylammoniumhydroxid, oberflächenmodifiziert werden.

Es können auch Mischungen der vorgenannten Verbindungen eingesetzt werden.

Die Dispersion kann erhalten werden indem man
- zunächst das erfindungsgemäße Zirkondioxidpulver auf einmal oder portionsweise unter dispergierenden Bedingungen bei einem Energieeintrag von weniger als 200 KJ/m³ in einem Lösungsmittel, bevorzugt Wasser, und gegebenenfalls ein oder mehrere Oberflächenmodifizierungsmittel und Additive zur pH-Regulierung enthält, einbringt
- wobei die Menge an Pulver so gewählt ist, dass der Gehalt an Pulver 30 bis 75 Gew.-%, und die Menge an Oberflächenmodifizierungsmittel so gewählt ist, dass der Gehalt an Oberflächenmodifizierungsmittel 0,1 bis 5 Gew.-%, jeweils bezogen auf die Gesamtmenge der Vordispersion, beträgt,
- die Vordispersion in wenigstens zwei Teilströme aufteilt, diese Teilströme in einer Hochenergiemühle unter einen Druck von mindestens 500 bar, bevorzugt 500 bis 1500 bar, besonders bevorzugt 2000 bis 3000 bar, setzt, über eine Düse entspannt und in einem gas- oder flüssigkeitsgefüllten Reaktionsraum aufeinandertreffen lässt und dabei vermahlt.

Das Verfahren kann so ausgeführt werden, dass die bereits einmal vermahlene Dispersion im Kreis geführt und weitere 2 bis 6 mal mittels der Hochenergiemühle vermahlen wird. Damit ist es möglich eine Dispersion mit einer geringeren Partikelgröße und/oder unterschiedlicher Verteilung, beispielsweise monomodal oder bimodal, zu erhalten.

Weiterhin kann das erfindungsgemäße Verfahren bevorzugt so ausgeführt werden, dass der Druck in der Hochenergiemühle 2000 bis 3000 bar ist. Auch mit dieser Maßnahme gelingt es eine Dispersion mit einer geringeren Partikelgröße und/oder unterschiedlicher Verteilung, beispielsweise monomodal oder bimodal, zu erhalten.

Weiterhin ist es vorteilhaft das erfindungsgemäße Verfahren so durchzuführen, dass die maximale Temperatur bei der Herstellung der (Vor-)Dispersion 40°C nicht übersteigt.

Ein weiterer Gegenstand der Erfindung ist die Verwendung des erfindungsgemäßen Zirkondioxidpulvers oder der erfindungsgemäßen Dispersion
· zur Herstellung von ZrO₂-Keramiken
· als Additiv in Keramiken; so kann zum Beispiel durch Zusatz zu Aluminiumoxid oder Siliciumcarbid eine Verstärkung des Materiales erreicht werden; bei der Herstellung von PZT-Keramiken
· als Bestandteil von Mahlkugeln; zum Beispiel zur Verstärkung von Mahlkugeln auf Aluminiumoxidbasis
· zur Herstellung von Lacken und Beschichtungen, beispielsweise bei der Hochtemperaturbeschichtung von Wärmetauschern.
· zum Feinpolieren von Glas
· als Katalysator und als Katalysatorträger
· in Membranen (zum Beispiel zum Erreichen einer hohen Korrosionsbeständigkeit der Membrane)
· in keramischen Farben und Feuerfestmaterialien
· zur Verstärkung von Textilfasern, Polymer-Nanocompositen, Verbundwerkstoffen und Klebeverbindungen
· zur Einstellung eines Brechungsindexes für optische Anwendungen in Klebstoffsystemen
· als Additiv in Leuchtmitten und Tonern

Die vorliegende Erfindung erlaubt die Herstellung von feinteiligen Zirkondioxidpulvern mit einem gegenüber dem Stand der Technik hohen Weißgrad. Es wurde gefunden, dass bei der Herstellung des erfindungsgemäßen Zirkondioxidpulvers über ein Flammenoxidationsverfahren eine bestimmte Wandtemperatur des Reaktors nicht unterschritten werden darf. Ein Fachmann wäre bestrebt gewesen, die Partikel nach ihrer Erzeugung aus der Gasphase möglichst rasch abzukühlen um eine für die pyrogenen Partikle typische Feinteiligkeit zu erhalten. Einen Einfluß der Wandtemperatur auf den Weißgrad der Zirkondioxidpartikel hätte er nicht in Betracht gezogen.

### Beispiele:

### Pulver

Beispiel 1 (Vergleich): 12 kg/h einer Lösung 1 bestehend aus 24,70 Gew.-% Zirkon-2-ethylhexanoat(als ZrO₂), 39,60 Gew.-% 2-Ethylhexansäure, 3,50 Gew.-% 2-(2-Butoxyethoxy) ethanol und 32,20 Gew.-% Testbenzin werden mit 28 Nm³/h Luft mittels einer Düse mit einem Durchmesser von 0,8 mm zerstäubt und mit Wasserstoff (18 Nm³/h) und Luft(225 Nm³/h)vermischt. Das Gemisch wird gezündet und die Flamme in einen von einem Gehäuse umschlossenen Reaktionsraum hinein verbrennen lassen. Dabei wird das Gehäuse extern auf eine Temperatur von ca. 90°C gekühlt. Anschließend werden Gase und das feste Produkte abgekühlt und das Zirkondioxidpulver in Filtern abgeschieden.

Beispiel 2 (Vergleich): Wie Beispiel 1, jedoch werden die an der Gehäusewand anhaftenden festen Produkte kontinuierlich mittels einer Luftkanone entfernt.

Beispiel 3 (gemäß Erfindung): Wie Beispiel 1, jedoch wird das Gehäuse nicht extern gekühlt. Die Wandtemperatur beträgt 900°C.

Beispiel 4 (gemäß Erfindung): Wie Beispiel 3.

Beispiel 5 (gemäß Erfindung): Wie Beispiel 3, jedoch unter Einsatz einer Lösung 2, die erhalten wird durch Mischen einer Lösung 2a bestehend aus 25,4 Gew.-% Zirkon-2-ethylhexanoat(als ZrO₂), 39,6 Gew.-% 2-Ethylhexansäure, 3,5 Gew.-% 2-(2-Butoxy ethoxy)ethanol und 31,5 Gew.-% Testbenzin mit einer Lösung 2b bestehend aus 30,7 Gew.-% Y(NO₃)₃*4H₂O und 69,3 Gew.-% Aceton, wobei das Gewichtsverhältnis 2a/2b 44,57 ist.

Einsatzstoffe und -mengen, sowie die BET-Oberfläche und den Weißgrad der erhaltenen Pulver sind in der Tabelle wiedergegeben.

Beispiel 6 (Vergleich): Beispiel 1 aus DE102004061698. Das Zirkondioxidpulver weist eine BET-Oberfläche von 63 m²/g auf. Der Weißgrad nach Berger beträgt 84%.

**Tabelle: Einsatzstoffe und -mengen; BET-Oberfläche und Weißgrad**

| Beispiel | Lösung I | Lösung II | Luft_{Verd} | Luft_{Verbr} | H₂ | Wandtemp. | BET | Weißgrad |
|---|---|---|---|---|---|---|---|---|
| | kg/h | kg/h | Nm³/h | Nm³/h | Nm³/h | °C | m²/g | % |
| 1* | 12 | - | 28 | 225 | 18 | 90 | 40 | 84 |
| 2* | 12 | - | 28 | 225 | 18 | n.b. | 39 | 81 |
| 3 | 12 | - | 25 | 220 | 9,5 | 900 | 38 | 93 |
| 4 | 12 | - | 25 | 220 | 9,5 | 900 | 40 | 91 |
| 5 | | 10,5 | 28 | 310 | 15 | 1000 | 38 | 92 |

| | | | | | | | | |
|---|---|---|---|---|---|---|---|---|
| * Vergleich | | | | | | | | |

### Dispersion

Beispiel 7 (gemäß Erfindung): In einem Ansatzbehälter werden 42,14 kg VE-Wasser und 1,75 kg Dolapix CE64 (Fa. Zschimmer und Schwartz) vorgelegt und anschließend mit Hilfe des Saugrüssels der Ystral Conti-TDS 3 (Statorschlitze: 4 mm Kranz und 1 mm Kranz, Rotor/Stator-Abstand ca. 1 mm) unter Scherbedingungen die 43,9 kg des Pulvers aus Beispiel 4 zugegeben.Nach Beendigung des Einziehens wird der Einsaugstutzen geschlossen und noch bei 3000 U/min 10 min lang nachgeschert.

Die so erhaltene Vordispersion weist einen Gehalt an Zirkondioxidpulver von 50 Gew.-% auf. Sie sedimentiert innerhalb eines Monates.

Diese Vordispersion wird in fünf Durchgängen durch eine Hochenergiemühle Sugino Ultimaizer HJP-25050 bei einem Druck von 2500 bar und Diamantdüsen von 0,3 mm Durchmesser geführt. Die so erhaltene Dispersion weist einen Medianwert von 79 nm und eine Viskosität bei 100 s⁻¹ von 27 mPas auf. Sie mindestens 6 Monate gegenüber Sedimentation, Verbackung und Verdickung stabil.

## Patentansprüche

1. Zirkondioxidpulver **dadurch gekennzeichnet, dass** es
· in Form aggregierter Primärpartikel vorliegt,
· eine BET-Oberfläche von 30 bis 150 m²/g und
· einen Weißgrad nach Berger von 88% oder mehr aufweist.

2. Zirkondioxidpulver nach Anspruch 1, **dadurch gekennzeichnet, dass** das Zirkondioxidpulver pyrogener Natur ist.

3. Zirkondioxidpulver nach den Ansprüchen 1 oder 2, **dadurch gekennzeichnet, dass** die Primärpartikel wenigstens eine stabilisierende Komponente in Form eines Oxides von Yttrium, Calcium, Magnesium oder Aluminium aufweisen.

4. Zirkondioxidpulver nach den Ansprüchen 1 bis 3, **dadurch gekennzeichnet, dass** die BET-Oberfläche 35 bis 65 m²/g ist.

5. Zirkondioxidpulver nach Anspruch 4, **dadurch gekennzeichnet, dass** die BET-Oberfläche 37 bis 43 m²/g ist.

6. Zirkondioxidpulver nach den Ansprüchen 1 bis 5, **dadurch gekennzeichnet, dass** die Summe der Anteile von Zirkondioxid und stabilisierender Komponente wenigstens 98 Gew.-% beträgt.

7. Zirkondioxidpulver nach den Ansprüchen 1 bis 6, **dadurch gekennzeichnet, dass** einen Anteil an Chlorid von weniger als 0,05 Gew.-% besitzt.

8. Zirkondioxidpulver nach den Ansprüchen 1 bis 7, **dadurch gekennzeichnet, dass** einen Anteil Kohlenstoff von weniger als 0,2 Gew.-% besitzt.

9. Zirkondioxidpulver nach den Ansprüchen 1 bis 7, **dadurch gekennzeichnet, dass** es ein oberflächenmodifiziertes Zirkondioxidpulver ist.

10. Verfahren zur Herstellung des Zirkondioxidpulvers gemäß den Ansprüchen 1 bis 9, **dadurch gekennzeichnet, dass**
· man eine Lösung, welche als Ausgangsstoff für das Zirkondioxid wenigstens eine organische Zirkonverbindung und gegebenenfalls wenigstens eine, die stabilisierende Komponente tragende Verbindung enthält, zerstäubt,
· mit einem Brenngas und Luft vermischt und
· das Gemisch in einer Flamme in einen von einem Gehäuse umschlossenen Reaktionsraum hinein verbrennen lässt,
· die Gase und das feste Produkte kühlt und anschliessend das feste Produkt von den Gasen abtrennt,
wobei
· die Temperatur im Reaktionsraum und entlang der dem Rektionsraum zugewandten Seite der Wandung des Gehäuses wenigstens 500°C beträgt.

11. Verfahren nach Anspruch 10, **dadurch gekennzeichnet, dass** die Temperatur an der Wandung 700 bis 1100°C ist.

12. Verfahren nach den Ansprüchen 10 oder 11, **dadurch gekennzeichnet, dass** man als Ausgangsstoff für das Zirkondioxid wenigstens ein Zirkoncarboxylat einsetzt.

13. Verfahren nach den Ansprüchen 10 bis 12, **dadurch gekennzeichnet, dass** der Ausgangsstoff in einem organischen Lösungsmittel gelöst ist.

14. Verfahren nach Anspruch 13, **dadurch gekennzeichnet, dass** das Lösungsmittel eine oder mehrere aliphatische Carbonsäuren mit 6 bis 9 Kohlenstoffatomen umfasst.

15. Dispersion enthaltend das Zirkondioxidpulver gemäß der Ansprüche 1 bis 9 mit einem Gehalt an Zirkondioxid von 20 bis 70 Gew.-% und einem mittleren, mittels Laserbeugung bestimmten Aggregatdurchmesser von weniger als 200 nm.

16. Dispersion nach Anspruch 15, **dadurch gekennzeichnet**, sie ein oberflächenmodifiziertes Zirkondioxidpulver enthält, welches erhältlich ist, indem ein Oberflächen-Modifizierungsmittel zu einer das Zirkondioxidpulver gemäß der Ansprüche 1 bis 8 enthaltenden flüssigen Phase gibt.

17. Verwendung des Zirkondioxidpulvers gemäß der Ansprüche 1 bis 9 oder der Dispersion gemäß der Ansprüche 16 oder 17 zur Herstellung von ZrO₂-Keramiken, als Additiv von Keramiken, zur Herstellung von Lacken und Beschichtungen, zum Feinpolieren von Glas, als Katalysator und als Katalysatorträger, in Membranen, in keramischen Farben und Feuerfest-Materialien, zur Verstärkung von Textilfasern, Polymer-Nanocompositen, Verbundwerkstoffen und Klebeverbindungen, zur Einstellung eines Brechungsindexes für optische Anwendungen in Klebstoffsystemen, als Additiv in Leuchtmitten und Tonern.
